# EUROPEAN PATENT APPLICATION

(11) **EP 4 512 613 A1**
(43) Date of publication of application: **26.02.2025**
(21) Application number: 23803026.6
(22) Date of filing: 12.05.2023
(51) Int. Cl.: B32B 17/00, B32B 17/10, B32B 27/30, B32B 33/00, B32B 7/12, B32B 3/08, B32B 38/00, B32B 37/12, B32B 37/10, B32B 37/06, B32B 7/023, B32B 38/14, B60J 1/00, C03C 27/12

(54) **LIGHT-REFLECTING LAMINATED GLASS, PREPARATION METHOD AND VEHICLE COMPRISING SAME**

(30) Priority: 13.05.2022 CN 202210518739
(71) Applicant: Fuyao Glass Industry Group Co., Ltd., Fuqing, Fujian 350300 (CN)
(72) Inventor: LIN, Shengye, Fuqing, Fujian 350300 (CN); YE, Jiarong, Fuqing, Fujian 350300 (CN); LIN, Shou, Fuqing, Fujian 350300 (CN)
(74) Representative: Patentanwälte Olbricht Buchhold Keulertz
(86) International application number: PCT/CN2023/093767
(87) International publication number: WO 2023/217258

(57) **Abstract**

Disclosed in the present invention are a light-reflecting laminated glass, a preparation method and a vehicle comprising same. The light-reflecting laminated glass comprises an inner light-guided glass plate, a light-reflecting micro-film layer, a bonding layer, and an outer glass plate which are sequentially stacked. The light-reflecting micro-film layer comprises a micron polymer film layer and a light reflection tissue formed on one side surface of the micron polymer film layer, and the light reflection tissue is in direct contact with the inner light-guided glass plate, such that the light reflection effect of the light reflection tissue is facilitated. According to the preparation method of the present invention, the light reflection tissue manufacturing process can be separated from the inner light-guided glass forming process, the machining procedures of the light reflection tissue manufacturing process and the inner light-guided glass forming process do not interfere with each other, and the production process difficulty is greatly reduced.

## Description

This application claims priority to Chinese Patent Application No.202210518739.6, entitled "Light-reflecting Laminated Glass, Preparation Method and Vehicle Comprising the Same" filed on May 13, 2022, the entire contents of which are incorporated herein by reference.

### Field of Technology

The present invention relates to the field of glass, in particular to a light-reflecting laminated glass, a preparation method and a vehicle comprising the same.

### Background Art

Conventionally, the laminated glass for automobiles is mainly implemented with practical functions. Light-reflecting laminated glass is formed after the laminated glass is added with light-reflecting functions. This not only satisfies the practical function, but also improves the luminous ambience and lighting effect of the laminated glass. Applications are not limited to sunroof glass, windshield, partition glass and the like.

### Summary of the invention

An object of the present invention is to provide a light-reflecting laminated glass, a preparation method thereof and a vehicle including the same. In the light-reflecting laminated glass of the present invention, the light-reflecting texture is in direct contact with the inner photoconductive glass plate, where the light-reflecting texture can well reflect the light propagating in the inner photoconductive glass plate back into the vehicle, such that the light emitting effect of the light-reflecting texture area visible to human eyes is achieved, thereby realizing the luminous ambience or lighting function. In addition, the preparation method provided by the invention can realize the separation between the light-reflecting texture manufacturing process and the inner photoconductive glass molding process, such that the two processing processes do not interfere with each other, which greatly reduces the production process difficulty; and then the light-reflecting texture is combined with the inner photoconductive glass in the lamination process.

In order to achieve the above object, the present invention provides the following technical solutions.

In one aspect, the present invention provides a light-reflecting laminated glass, comprising an inner photoconductive glass plate, a light-reflecting micron-sized film layer, an adhesive layer and an outer glass plate which are sequentially stacked;
the light-reflecting micron-sized film layer comprises a micron-sized polymer film layer and a light-reflecting texture formed on the surface of one side of the micron-sized polymer film layer, and the light-reflecting texture is in contact with the inner photoconductive glass plate.

The light-reflecting texture is used for reflecting light, and can be configured to have different thicknesses of, preferably 1-15 µm. Various visible light transmittances (TL) can be provided in the light-reflecting texture region by providing different thicknesses, and thus different visible light transmittances (TL) states of the light-reflecting texture are achieved. Preferably, in the light-reflecting micron-sized film layer, the visible light transmittance (TL) of the region having the light-reflecting texture is 0 to 85%, preferably 0, where the light-reflecting effect of the light-reflecting texture is optimal. The region without the light-reflecting texture is a transparent micron-sized polymer film layer, having visible light transmittance TL of ≥ 70%, preferably ≥ 80%, more preferably ≥ 90%.

In addition, the light-reflecting texture may be patterned to achieve different patterned reflected light rays.

According to the light-reflecting laminated glass of the present invention, preferably, the material of the light-reflecting texture is one or more light-reflecting particles selected from, for example, titanium dioxide, zinc oxide, aluminum oxide, zirconium oxide, lead sulfate, barium sulfate, calcium carbonate, and the like. The light-reflecting particles are mixed with a solvent for use in preparing the light-reflecting texture.

The micron-sized polymer film layer is made by a molding process such as extrusion blow molding, extrusion casting, or extrusion stretching, followed by quenching. The light-reflecting texture is prepared via a printing process and the like on this micron-sized polymer film layer 11. The micron-sized polymer film may be suitable for lamination with any curved glass.

According to the light-reflecting laminated glass of the present invention, preferably, the micron-sized polymer film layer has a thickness of less than or equal to 100 µm, more preferably 20 to 30 µm, so as to better control the flow rate of the micron-sized polymer film layer in the process of thermal processing.

According to the light-reflecting laminated glass of the present invention, preferably, the polymer in the micron-sized polymer film layer comprises polyvinyl butyral. Further preferably, the material of the micron-sized polymer film layer further comprises a plasticizer in a content of less than or equal to 5%, so as to reduce the fluidity of the micron-sized polymer film in the process of thermal processing and to avoid the damage of the light-reflecting texture layer caused by the flow of the micron-sized polymer film.

According to the light-reflecting laminated glass of the present invention, preferably, there is a bonding function between the micron-sized polymer film layer and the inner photoconductive glass plate to enable a bonding force of greater than or equal to 6 MPa, as determined by the TL957 glass dynamic bonding force test method.

According to the light-reflecting laminated glass of the present invention, preferably, the bonding force between the micron-sized polymer film layer and the adhesive layer is greater than or equal to 6 MPa, as determined by the TL957 glass dynamic bonding force test method.

According to the light-reflecting laminated glass of the present invention, preferably, the material of the adhesive layer is PVB or EVA, preferably PVB.

According to the light-reflecting laminated glass of the present invention, preferably, the refractive index of the inner photoconductive glass plate is n, the refractive index of the light-reflecting texture is n1, and the refractive index of the micron-sized polymer film layer is n2.

Preferably, the refractive index (n) of the inner photoconductive glass plate is greater than the refractive index (n1) of the light-reflecting texture, i.e., n > n1; the refractive index (n) of the inner photoconductive glass plate is greater than the refractive index (n2) of the micron-sized polymer film layer, i.e., n > n2. Since the propagation path of the light propagating in the inner of photoconductive glass is disordered, some non-linearly propagating light may be transmitted from the surface of the inner of photoconductive glass. When the transmitted light arrives at the micron-sized polymer film, if n > n2, i.e. the light is transmitted from the optically dense medium to the optically hydrophobic medium, the light will be totally reflected back into the inner of photoconductive glass since the incident angle of the light transmitted from the surface is greater than the critical angle, and continue to propagate in the inner of photoconductive glass, which can reduce the light loss.

Further preferably, the refractive index of the light-reflecting texture is greater than the refractive index of the micron-sized polymer film layer, i.e., n1 > n2. When the propagating light arrives at the light-reflecting texture, the light-reflecting texture achieves a total reflection function on the propagating light because the light-reflecting texture has a preferably low visible light transmittance (TL). Meanwhile, a diffuse reflection function can be achieved, so that the propagation direction of light is changed to reflect back into the vehicle, and the luminous atmosphere and the lighting effect of a pattern layer formed by the light-reflecting texture are improved, so as to achieve the object of the invention.

According to the light-reflecting laminated glass of the present invention, preferably, the outer glass plate is a double-layer laminated glass plate or a monolithic glass plate. Further, the outer glass plate may be an organic or inorganic, planar or curved double-layer laminated or monolithic glass plate.

According to the light-reflecting laminated glass of the present invention, preferably, it is an inorganic high-transparency glass or organic high-transparency glass, preferably an inorganic high-transparency glass. The inner photoconductive glass plate may have a thickness of 0.7 to 3 mm, preferably 1.5 to 2.1 mm.

According to the light-reflecting laminated glass of the present invention, preferably, the light-reflecting laminated glass further comprises a light source. In this case, the light-reflecting laminated glass also functions to achieve illumination and becomes an illuminating glass. The light source is provided at an end of the inner photoconductive glass plate. The light source may be provided at some area or all of the ends of the inner photoconductive glass plate according to specific needs. The light emitted by the light source enters the inner photoconductive glass plate, and is disordered during propagation of the inner photoconductive glass plate. Part of the light propagates away along the inner photoconductive glass; and part of the light propagates to the micron-sized polymer film layer to form total reflection, or propagates to the light-reflecting texture to form diffuse reflection or total reflection.

According to the light-reflecting laminated glass of the present invention, preferably, the light source is an LED.

Another aspect of the present invention provides a vehicle including the light-reflecting laminated glass.

The light-reflecting laminated glass of the present invention can be used as vehicle glass, wherein the inner photoconductive glass plate is located in the vehicle, and the outer glass plate is located outside the vehicle, such that the illumination within the vehicle can be achieved. When the photoconductive glass plate is located outside the vehicle, functions such as outward fixed information prompt, status display, illumination and the like may be realized.

Another aspect of the present invention provides a method for preparing the light-reflecting laminated glass, comprising the following steps:
preparing the light-reflecting micron-sized film layer and the inner photoconductive glass plate, separately;
laminating the inner photoconductive glass plate, the light-reflecting micron-sized film layer, the adhesive layer and the outer glass plate in sequence, so as to ensure that the light-reflecting texture on the micron-sized polymer film is in direct contact with the inner photoconductive glass plate;
performing a pre-treatment by means of negative-pressure vacuumizing and heating, and then performing a high-pressure treatment by means of pressurization and heating, to obtain the light-reflecting laminated glass.

According to the preparation method of present invention, the light-reflecting texture manufacturing process and the inner photoconductive glass molding process are separated, such that the two processing processes do not interfere with each other, which greatly reduces the production process difficulty.

Since most of the vehicle glass is applied in the form of a curved surface, and the light-reflecting texture needs to be in contact with the inner photoconductive glass plate, in the existing process, generally it is necessary to form the light-reflecting texture on the inner photoconductive glass plate. The existing manufacturing process mainly comprises the following modes: (I) An inorganic light-reflecting texture is directly printed on a flat glass plate, and it is then cured by sintering at a high temperature of 400°C to 700°C or cured with a curved surface molding. This mode tends to cause the light-reflecting texture to be damaged in the curing process and is also limited by the production process capability, which greatly affects the production difficulty of products. (II) If applied on a curved surface, it is necessary to print the light-reflecting texture on the surface after the curved surface is molded. Existing printing techniques are not capable of printing on large curved glass surfaces, which limits the scope of application. In the present invention, by fabricating the light-reflecting texture on a micron-sized polymer film, the production of the inner photoconductive glass plate is completely unrestricted, as long as these two are combined during the lamination process.

According to the preparation method of the present invention, preferably, the preparation method further comprises providing a light source after the high-pressure treatment. The light source is provided and packaged according to the need.

According to the preparation method of the present invention, preferably, the negative-pressure vacuumizing in the pre-treatment is carried out at a pressure of -0.1 MPa and a heating temperature of 115°C. The high-pressure treatment is carried out at a high pressure of 1.2 MPa and a heating temperature of 145°C.

According to the preparation method of the present invention, preferably, the micron-sized polymer film layer in the light-reflecting micron-sized film layer is made by a molding process such as extrusion blow molding, extrusion casting, or extrusion stretching, followed by quenching; and the light-reflecting texture is prepared by a printing process on the micron-sized polymer film layer.

According to the preparation method of the present invention, preferably, the inner photoconductive glass may be an inorganic high-transparency glass or organic high-transparency glass, preferably an inorganic high-transparency glass. The inner photoconductive glass may have a thickness of 0.7 to 3 mm, preferably 1.5 to 2.1 mm.

The inner photoconductive glass plate is prepared by the following process:
cutting and trimming the inner photoconductive glass plate according to the required size thereof;
molding the inner photoconductive glass plate by using a pre-manufactured mold.

According to the preparation method of the present invention, preferably, the visible light transmittance (TL) of the micron-sized polymer film in the light-reflecting micron-sized film layer after thermal processing is ≥ 70%, preferably ≥ 80%, more preferably ≥ 90%; and
the micron-sized polymer film in the light-reflecting micron-sized film layer has a point-to-point relative position change of less than or equal to 50 µm before and after the micron-sized polymer film is manufactured into a finished product, such that a large appearance change of the pre-set light-reflecting texture can be avoided.

In the light-reflecting laminated glass of the present invention, the light-reflecting texture is in direct contact with the inner photoconductive glass plate, and the light-reflecting effect of the light-reflecting texture is not affected. The preparation method provided by the invention can realize the separation between the light-reflecting texture manufacturing process and the inner photoconductive glass molding process, such that the two processing processes do not interfere with each other, which greatly reduces the production process difficulty; and then the light-reflecting texture is combined with the inner photoconductive glass in the lamination process. In addition, the thickness and plasticizer content of the micron-sized polymer film are greatly reduced, such that the light-reflecting texture would not be damaged by fluidity, to ensure the integrity of the light-reflecting texture.

### Brief Description of the Drawings

FIG. 1 is a schematic diagram of a light-reflecting micron-sized film layer according to a preferred embodiment of the present invention.
FIG.2 is a cross-sectional view of a light-reflecting micron-sized film layer according to a preferred embodiment of the present invention.
FIG.3 is a schematic view of a light-reflecting laminated glass with a light source according to a preferred embodiment of the present invention.
FIG.4 is a schematic view of a light-reflecting laminated glass with a light source according to another preferred embodiment of the present invention.

### Numerical References:

11: micron-sized polymer film;
11.1: adhesive layer;
22: light-reflecting texture;
33: outer glass plate;
33.1: inner photoconductive glass plate;
55: LED (Light Emitting Diode).

### Detailed Description of Preferred Embodiments

The present invention will be further described below with reference to preferred embodiments to provide clearer explanation of the present invention. A person skilled in the art would understand that the contents specifically described below are illustrative and not restrictive, and should not limit the protection scope of the present invention.

The present invention here provides a light-reflecting laminated glass, comprising an inner photoconductive glass plate, a light-reflecting micron-sized film layer, an adhesive layer and an outer glass plate which are sequentially stacked.

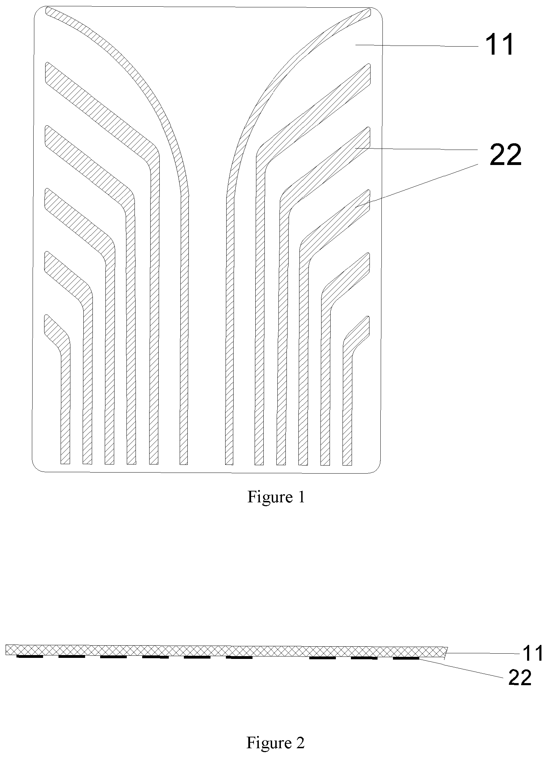

The light-reflecting micron-sized film layer is shown in FIG. 1 and FIG.2, and includes a micron-sized polymer film layer 11 and a light-reflecting texture 22 formed on the surface of one side of the micron-sized polymer film layer. The light-reflecting texture 22 may be patterned as shown in FIG. 1.

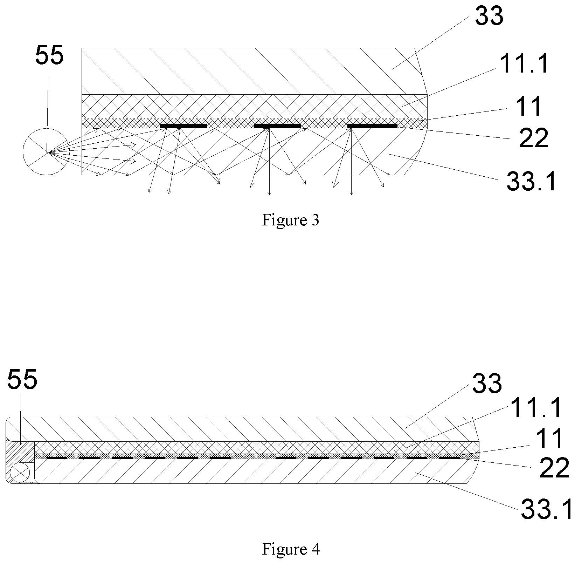

In another preferred embodiment, the light-reflecting laminated glass is further provided with a light source to realize lighting function, and can be used as a vehicle glass. The inner photoconductive glass plate is located inside the vehicle, and the outer glass plate is located outside the vehicle, to realize the lighting inside the vehicle. As shown in FIG.3, the light-reflecting laminated glass comprises an inner photoconductive glass plate 33.1, a light-reflecting micron-sized film layer (11 and 22), an adhesive layer 11.1 and an outer glass plate 33 which are sequentially stacked, wherein the light-reflecting texture 22 in the light-reflecting micron-sized film layer is in direct contact with the inner photoconductive glass plate 33.1, which is beneficial to the light-reflecting effect of the light-reflecting texture. The light source is an LED 55, which is provided at an end of the inner photoconductive glass plate 33.1. The light entering the inner photoconductive glass plate is disordered in the propagation process, wherein part of the light propagates away along the inner photoconductive glass, and part of the light propagates to the micron-sized polymer film layer to form total reflection, or propagates to the light-reflecting texture to form diffuse reflection (back into the vehicle) or total reflection phenomenon, to form the luminous state of the light-reflecting texture as viewed by the human eyes.

The light-reflecting texture 22 is configured to reflect light, and may be provided to have different thicknesses of, preferably 1 to 15 µm. Various visible light transmittances (TL) can be provided in the light-reflecting texture region by providing different thicknesses, and thus different visible light transmittances (TL) states of the light-reflecting texture are achieved. Preferably, the visible light transmittance TL of the region having the light-reflecting texture in the light-reflecting micron-sized film layer is 0-85%, preferably 0, where the light-reflecting effect of the light-reflecting texture is optimal. The region without the light-reflecting texture is a transparent micron-sized polymer film layer, having visible light transmittance (TL) of ≥ 70%, preferably ≥ 80%, more preferably ≥ 90%. The material of the light-reflecting texture is one or more light-reflecting particles selected from, for example, titanium dioxide, zinc oxide, aluminum oxide, zirconium oxide, lead sulfate, barium sulfate, calcium carbonate, and the like. Further, the material of the light-reflecting texture is composed of a mixture of inorganic light-reflecting particles and a solvent.

The micron-sized polymer film layer 11 is made by a molding process such as extrusion blow molding, extrusion casting, or extrusion stretching using a polymer (preferably polyvinyl butyral), followed by quenching, so that the light-reflecting texture 22 may be formed thereon by printing. The thickness of the micron-sized polymer film layer 11 is less than or equal to 100 µm, more preferably 20 to 30 µm. In addition, the content of the plasticizer in the micron-sized polymer film layer 11 is controlled to be less than or equal to 5%, so as to reduce the fluidity of the micron-sized polymer film 11 during the thermal processing process, avoid damage to the light-reflecting texture layer 22 caused by the flow of the micron-sized polymer film 11, and ensure the integrity thereof.

The outer glass plate 33 may be a double-layer laminated glass plate or a monolithic sheet glass plate. The inner photoconductive glass plate 33.1 may be an inorganic high-transparency glass or organic high-transparency glass, preferably an inorganic high-transparency glass. It may have a thickness of 0.7 to 3 mm, preferably 1.5 to 2.1 mm. The preparation process is as follows:
1) cutting and trimming the inner photoconductive glass plate according to the required size thereof;
2) molding the inner photoconductive glass plate by using a pre-manufactured mold.

The material of the adhesive layer 11.1 is PVB or EVA, preferably PVB.

The bonding force between the micron-sized polymer film layer 11 and the adhesive layer 11.1 is greater than or equal to 6 MPa. There is a bonding function between the micron-sized polymer film layer 11 and the inner photoconductive glass plate 33.1 to enable a bonding force of greater than or equal to 6 MPa. The bonding force is determined by the TL957 glass dynamic bonding force test method.

The refractive index of the inner photoconductive glass plate 33.1 is n, the refractive index of the light-reflecting texture 22 is n1, and the refractive index of the micron-sized polymer film layer 11 is n2.

The refractive index n of the inner photoconductive glass plate 33.1 is greater than the refractive index n 1 of the light-reflecting texture 22, i.e., n > n 1; the refractive index n of the inner photoconductive glass plate 33.1 is greater than the refractive index n2 of the micron-sized polymer film layer 11, i.e., n > n2; the refractive index of the light-reflecting texture 22 is greater than the refractive index of the micron-sized polymer film layer 11, i.e., n1 > n2.

The above light-reflecting laminated glass is prepared by the following steps:
1) preparing a light-reflecting micron-sized film layer and an inner photoconductive glass plate 33.1, separately;
2) laminating the inner photoconductive glass plate 33.1, the light-reflecting micron-sized film layer, an adhesive layer 11.1 and an outer glass plate 33 in sequence, so as to ensure that the light-reflecting texture 22 on the micron-sized polymer film 11 is in direct contact with the inner photoconductive glass plate 33.1;
3) performing a pre-treatment by means of negative-pressure vacuumizing at -0.1 MPa and heating at 115°C, and then performing a high-pressure treatment by means of pressurization at 1.2 MPa and heating at 145°C, to obtain the light-reflecting laminated glass; and
4) providing a LED 55 according to the vehicle glass structure to be completed.

The light-reflecting micron-sized film layer (11 and 22) is prepared as follows:
the micron-sized polymer film layer 11 is made by a molding process such as extrusion blow molding, extrusion casting, or extrusion stretching, followed by quenching; and the light-reflecting texture 22 is prepared by printing and the like on this micron-sized polymer film layer 11.

The inner photoconductive glass plate 33.1 is prepared by the following process:
1) cutting and trimming the photoconductive glass according to the required size thereof;
2) molding the photoconductive glass by using a pre-manufactured mold, to finally form the desired inner photoconductive glass plate 33.1.

The visible light transmittance (TL) of the micron-sized polymer film in the light-reflecting micron-sized film layer after thermal processing is larger than or equal to 90%; the micron-sized polymer film in the light-reflecting micron-sized film layer has a point-to-point relative position change of less than or equal to 50 µm before and after the thermal processing.

As shown in FIG.4, in another preferred embodiment, the light source 55 is packaged in a laminated glass as required.

### Application Example 1

The product in this application example was prepared according to the above preparation method of the light-reflecting laminated glass, and had an outer contour size of 1000 mm × 500 mm, in which:
a 2.0 mm high-transparency glass, with a visible light transmittance ≥ 90% and a refractive index n = 1.52, was used as the inner photoconductive glass plate 33.1;
the micron-sized polymer film 11 had a thickness of 25 µm; and in the region of the light-reflecting texture 22, the visible light transmittance (TL) =84%, and the refractive index n1 = 1.48;
a 0.76 mm PVB material was used as the adhesive layer 11.1; and
a 4.0 tempered glass of FG18 was used as outer glass plate 33.

In the above lamination process of the micron-sized polymer film layer, the surface of the prepared light-reflecting texture was brought into contact with the inner photoconductive glass plate 33.1.

The light source LED 55 was provided in accordance with FIG. 4.

The brightness of the light-reflecting texture region was tested on one side of the inner photoconductive glass plate by using a Konica Minolta Spot-type spectroscopic luminance meter. In a specific environment and condition, a brightness value of the given region was measured in a range of 8-25 cd/m²; and meanwhile, a brightness test was performed on a given region having no light-reflecting texture to obtain a brightness value in a range of 0.25-1.3 cd/m². The brightness values are only obtained from the testing of this Example and do not limit the contents of the present application. By changing any of the conditions, the brightness values will fluctuate.

### Application Example 2

The product in this application example was prepared according to the above preparation method of the light-reflecting laminated glass, and had an outer contour size of 1000 mm × 500 mm, in which:
a 1.8 mm high-transparency glass, with a visible light transmittance ≥ 90% and a refractive index n = 1.51, was used as the inner photoconductive glass plate 33.1;
the micron-sized polymer film 11 had a thickness of 25 µm; and in the region of the light-reflecting texture 22, the visible light transmittance (TL) =80.5%, and the refractive index n1 = 1.48;
a 0.38 mm PVB material was used as the adhesive layer 11.1; and
a 2.1 gray double laminated glass was used as outer glass plate 33.

In the above lamination process of the micron-sized polymer film layer, the surface of the prepared light-reflecting texture was brought into contact with the inner photoconductive glass plate 33.1.

The light source LED 55 was provided in accordance with FIG. 4.

The brightness of the light-reflecting texture region was tested on one side of the inner photoconductive glass plate by using a Konica Minolta Spot-type spectroscopic luminance meter. In a specific environment and condition, a brightness value of the given region was measured in a range of 6.5-22 cd/m²; and meanwhile, a brightness test was performed on a given region having no light-reflecting texture to obtain a brightness value in a range of 0.2-1.2 cd/m². The brightness values are only obtained from the testing of this Example and do not limit the contents of the present application. By changing any of the conditions, the brightness values will fluctuate.

### Comparative Example 1

The product in this comparative example was prepared according to the product size and structure of Application Example 1 as follows:
a 2.0 mm high-transparency glass, with a visible light transmittance ≥ 90% and a refractive index n = 1.52, was used as the inner photoconductive glass plate 33.1;
the micron-sized polymer film 11 had a thickness of 25 µm; and in the region of the light-reflecting texture 22, the visible light transmittance (TL) =80.5%, and the refractive index n1 = 1.48;
a 0.76 mm PVB material was used as the adhesive layer 11.1; and
a 4.0 tempered glass of FG18 was used as outer glass plate 33.

In the above lamination process of the micron-sized polymer film layer, the surface of the prepared light-reflecting texture was not in contact with the inner photoconductive glass plate 33.1, that is, the light-reflecting texture 22 was separated from the inner photoconductive glass plate 33.1 by the micron-sized polymer film 11.

The light source LED 55 was provided in accordance with FIG. 4.

The brightness of the light-reflecting texture region was tested on one side of the inner photoconductive glass plate by using a Konica Minolta Spot-type spectroscopic luminance meter. In the same specific environment and condition as in Example 1, a brightness value of the given region was measured in a range of 0.45-1.8 cd/m²; and meanwhile, a brightness test was performed on a given region having no light-reflecting texture to obtain a brightness value in a range of 0.25-1.3 cd/m². It can be seen from the above comparative example that, in the lamination process of the product structure of the present invention, it is necessary to ensure that the prepared light-reflecting texture is in contact with the inner photoconductive glass plate in order to achieve luminous ambience or lighting effect by the light-reflecting texture, so as to achieve the object of the present invention.

Obviously, the above examples of the present invention are merely examples for the purpose of clearly illustrating the present invention, and are not intended to be a limitation of the embodiments of the present invention. For a person of ordinary skill in the field, on the basis of the above description, it is also possible to make other different forms of changes or variations, and it is not possible to exhaust all the embodiments herein. All the obvious changes or variations derived from the technical solution of the present invention are still within the protection scope of the present invention.

## Claims

1. A light-reflecting laminated glass, comprising an inner photoconductive glass plate, a light-reflecting micron-sized film layer, an adhesive layer and an outer glass plate which are sequentially stacked;
wherein the light-reflecting micron-sized film layer comprises a micron-sized polymer film layer and a light-reflecting texture formed on the surface of one side of the micron-sized polymer film layer, and the light-reflecting texture is in contact with the inner photoconductive glass plate.

2. The light-reflecting laminated glass according to claim 1, wherein the light-reflecting texture has a thickness of 1 to 15 µm.

3. The light-reflecting laminated glass according to claim 1, wherein in the light-reflecting micron-sized film layer, the visible light transmittance (TL) of the region having the light-reflecting texture is 0 to 85%, and the visible light transmittance (TL) of the region without the light-reflecting texture is larger than or equal to 70%.

4. The light-reflecting laminated glass according to claim 1, wherein the light-reflecting texture is patterned.

5. The light-reflecting laminated glass according to claim 1, wherein the material of the light-reflecting texture is one or more selected from titanium dioxide, zinc oxide, aluminum oxide, zirconium oxide, lead sulfate, barium sulfate, and calcium carbonate.

6. The light-reflecting laminated glass according to claim 1, wherein the micron-sized polymer film layer has a thickness of less than or equal to 100 µm.

7. The light-reflecting laminated glass according to claim 1, wherein the polymer in the micron-sized polymer film layer comprises polyvinyl butyral.

8. The light-reflecting laminated glass according to claim 7, wherein the micron-sized polymer film layer further comprises a plasticizer in a content of less than or equal to 5%.

9. The light-reflecting laminated glass according to claim 1, wherein a bonding force between the micron-sized polymer film layer and the inner photoconductive glass plate is greater than or equal to 6 MPa.

10. The light-reflecting laminated glass according to claim 1, wherein a bonding force between the micron-sized polymer film layer and the adhesive layer is greater than or equal to 6 MPa.

11. The light-reflecting laminated glass according to claim 1, wherein the refractive index of the inner photoconductive glass plate is greater than the refractive index of the light-reflecting texture.

12. The light-reflecting laminated glass according to claim 11, wherein the refractive index of the inner photoconductive glass plate is greater than the refractive index of the micron-sized polymer film layer.

13. The light-reflecting laminated glass according to claim 12, wherein the refractive index of the light-reflecting texture is greater than the refractive index of the micron-sized polymer film layer.

14. The light-reflecting laminated glass according to any one of claims 1 to 13, wherein the light-reflecting laminated glass further comprises a light source provided at an end of the inner photoconductive glass plate.

15. A vehicle comprising the light-reflecting laminated glass according to any one of claims 1 to 14.

16. A method for preparing the light-reflecting laminated glass according to any one of claims 1 to 14, comprising the following steps:
preparing the light-reflecting micron-sized film layer and the inner photoconductive glass plate, separately;
laminating the inner photoconductive glass plate, the light-reflecting micron-sized film layer, the adhesive layer and the outer glass plate in sequence, so as to ensure that the light-reflecting texture on the micron-sized polymer film is in direct contact with the inner photoconductive glass plate;
performing a pre-treatment by means of negative-pressure vacuumizing and heating, and then performing a high-pressure treatment by means of pressurization and heating, to obtain the light-reflecting laminated glass.

17. The method according to claim 16, further comprising providing a light source after the high-pressure treatment.

18. The method according to claim 16, wherein the micron-sized polymer film layer in the light-reflecting micron-sized film layer is made by a molding process of extrusion blow molding, extrusion casting, or extrusion stretching, followed by quenching; and
the light-reflecting texture is prepared by a printing process on the micron-sized polymer film layer.

19. The method according to claim 16, wherein the micron-sized polymer film in the light-reflecting micron-sized film layer has a point-to-point relative position change of less than or equal to 50 µm before and after the micron-sized polymer film is manufactured into a finished product.
